# EUROPEAN PATENT APPLICATION

(11) **EP 1 512 774 A1**
(43) Date of publication of application: **09.03.2005**
(21) Application number: 03447225.8
(22) Date of filing: 08.09.2003
(51) Int. Cl.: C25F 3/00, C25F 7/00, B01F 1/00, G21G 4/08

(54) **A method and apparatus for the electrodissolution of elements**

(71) Applicant: ION BEAM APPLICATIONS S.A., 1348 Louvain-la-Neuve (BE)
(72) Inventor: Van den Winkel, Pierre Norbert, 9320 Erembodegem-Aalst (BE)
(74) Representative: Van Malderen, Joelle

(57) **Abstract**

The present invention is related to a method and apparatuses for the electrodissolution of an element, in particular of fragments of an irradiated metallic target, comprising a fraction of a radio-isotope, for example Palladium-103. Besides the known steps of subjecting an electrolytic solution comprising the fragments to a voltage applied between two electrodes submerged in the solution, the method comprises the step of applying an external force to the solution in order to accumulate the fragments in the vicinity of one electrode, and thereby accelerate the dissolution process. The force applied may be centrifugal, or it may be a force obtained through a flow of the solution.

## Description

### Field of the invention

The present invention is related to the process of electrodissolution of an element, in particular of metallic isotope targets such as Rhodium-103, which are used for the production of radio-isotopes, such as Palladium-103.

### State of the art

In order to obtain no-carrier added radioisotopes for use as radioactive treatment implants, a suitable target is bombarded by a particle beam. This irradiation treatment causes a small portion of the stable target isotope to be transformed into the desired radioisotope. A widely used metallic target is Rhodium-103, which partially transmutes into Pd-103 upon irradiation.

Often, large surface area Rhodium foils or electrodeposits (e.g. on copper plates) weighing up to several grams are used. These targets are then subjected to a milliampère proton beam bombardment.

After irradiation, the Rhodium foils or deposits need to be dissolved in order to be able to separate the Pd-103 from the Rhodium. It is widely accepted that electrodissolution in an electrolyte, preferably hydrochloric acid, is the best technique available for this purpose. This method involves applying an alternating current between two electrodes, which are submerged in the acid, wherein one electrode is formed by the Rhodium foil or deposit. The basic technique was first described by Box (ORNL-3802 (Gillette J. H. Editor), UC-23-Isotopes-Industrial Technology TID-450. 39^{th} edition, p. 26, June 1964).

However, the drawback of this method is that even at low current densities, the foils or deposits tend to break up into small fragments which fail to dissolve, as they are not in electrical contact with the electrode. This phenomenon places a limit on the applicable current densities, and therefore on the dissolution rate and yield which can be obtained with the technique, as it is presently known in the art. This also means that the technique is not applicable for rhodium fragments, rhodium powder and rhodium wires.

### Aims of the invention

The present invention aims to provide a method and apparatuses which allow time-controlled electrodissolution to be performed on fragments, in the form of a powder or fragments obtained by cutting foils or wires, at higher current densities, and therefore higher dissolution rates, without suffering from the drawbacks of the prior art.

### Summary of the invention

The present invention is related to a method for the dissolution of an element, said method comprising the steps of:
- producing fragments of said element,
- introducing the fragments in a liquid, said liquid being an electrolyte,
- applying a current to said liquid, by contacting said liquid with two electrodes coupled to a voltage,
characterized in that said method further comprises the step of :
- applying an external force to said liquid, said force having the effect of displacing said fragments towards one electrode -and holding a plurality of fragments against the surface of said electrode.

According to preferred embodiments of the invention, said force may be a centrifugal force, or said force may be a pressure difference, inducing the circulation of said liquid in a circuit.

Said element is preferably a metallic element chosen from the group of: Ruthenium, Rhodium, Palladium Osmium, Iridium, Platinum, Gold.

Said fragments may have previously undergone an irradiation treatment, so that said fragments contain a fraction of a radio-isotope.

The invention is equally related to a first apparatus for performing the method the invention, characterized in that said apparatus comprises:
- a first electrode in the form of a rotatable receptacle, for receiving an electrolyte comprising fragments which are to be dissolved in said electrolyte,
- a second electrode extending into said receptacle, and being able to remain extended into said receptacle during rotation of said receptacle,
- a means for applying a voltage between said electrodes, during rotation of said first electrode.

Preferably, in said first apparatus according to the invention, a top piece, made from a material which is not electrically conductive, can be mounted onto said rotatable receptacle/electrode.

Said first apparatus according to the invention may further comprise a means for measuring the level of said liquid in said receptacle, and a means for adding said liquid to said receptacle during operation, in order to maintain the volume of said liquid at or around a predefined value.

Said first apparatus according to the invention may further comprise a temperature sensor able to measure the temperature of said liquid, and a means for cooling said receptacle, in order to maintain said temperature at or around a predefined value.

Said means for cooling may consist of one or more tubes, able to direct a flow of compressed air towards said receptacle.

Said first apparatus according to the invention may further comprise a means for measuring the current between said two electrodes, and a means for controlling said current.

The invention is equally related to a second apparatus for performing the method of the invention, characterized in that said apparatus comprises:
- A liquid circuit comprising a pump, able to circulate a liquid in said circuit,
- a first electrode which has the form of a filter, i.e. a plate comprising a plurality of openings, said openings being essentially smaller than the average size of said fragments, said filter being placed in said circuit, in such a way that the circulating liquid must pass through said filter,
- a second electrode, placed in said fluid circuit,
- a means to apply a voltage between said two electrodes.

In said second apparatus according to the invention, said circuit may comprise an electrodissolution cell, and wherein said first electrode, i.e. said filter is located at the bottom of said cell, while said second electrode is located above said first electrode.

Said second apparatus according to the invention may further comprise a cooling system for cooling said liquid during its circulation.

### Short description of the drawings

Fig. 1 represents a schematic view of an apparatus according to a first embodiment of the invention.

Figure 2 shows the HCl-solution's concentration as a function of time for the apparatus of figure 1, when applying a feedback of the solution.

Figure 3 shows the dissolution rate as a function of the HC1 concentration, for the apparatus of fig. 1.

Figure 4 shows the dissolution rate as a function of the applied current, for the apparatus of fig. 1.

Figure 5 shows the dissolution rate as a function of input weight of target fragments, for the apparatus of figure 1.

Figure 6 shows, for the apparatus of figure 1, the dissolution time corresponding to 99% dissolution, for different currents and as a function of the acid solution.

Fig. 7 represents a schematic view of an apparatus according to a second embodiment of the invention.

### Detailed description of the invention

The present invention is related to a method for the electrodissolution of elements, and specifically of irradiated targets carrying radio-isotopes. In the following description, the elements Rhodium-103 as the target and Palladium-103 as the obtained radio-isotope are used by way of example. It is to be noted that the present invention is valid for other targets as well, for example Platinum, gold, Iridium, etc. In the case of Rh-Pd, the method of the invention comprises the steps of:
- producing fragments of Rhodium-103, said Rhodium-103 having undergone an irradiation treatment, so that it contains a fraction of Pd-103. The fragments may be obtained by cutting a Rhodium foil or a wire into such fragments, or they may be the particles of a Rhodium powder.
- introducing the fragments in a hydrochloric acid solution,
- applying an AC current to said solution, by contacting said solution with two electrodes coupled to an AC voltage,
- applying an external force to said solution, said force having the effect of displacing said fragments towards one electrode and holding a large number of fragments against the surface of said electrode.

The force can be a pressure difference generated by a pump, which induces a fluid flow in a circuit. It can also be a centrifugal force, or any other. As will be described in more detail further on, the fluid flow and centrifugal force respectively form the basis of two particular embodiments of an apparatus able to perform the method. The advantage of this method is that while the fragments are held against one of the electrodes by the described force, a high current density can be applied which in the vicinity of the electrode where the Rhodium fragments have gathered, will result in a high production rate (and hence of a high concentration) of the chlorine species at the solution/electrode interface that rapidly dissolves the Rhodium present at the electrode. This effect cannot be obtained when fragments are floating in the solution, as was established by the prior art technique.

In fact, the disadvantage of the prior art, namely the fragmentation of Rhodium foils or deposits under the influence of the AC current, is totally absent here. The method of the invention actually requires the Rhodium in fragmented form, i.e. in the form of particles or flakes, powder or cut foils or cut wires, in order to successfully apply the method. This entails that the current which can be applied is no longer limited by the prior art phenomenon of fragmentation, so that this current may be raised considerably and will only be limited by other considerations, mainly related to temperature. It can therefore be said that the present invention effectively solves the previously existing problem, which was related to the ineffective electrodissolution of Rhodium fragments.

### Description of two preferred embodiments of the invention

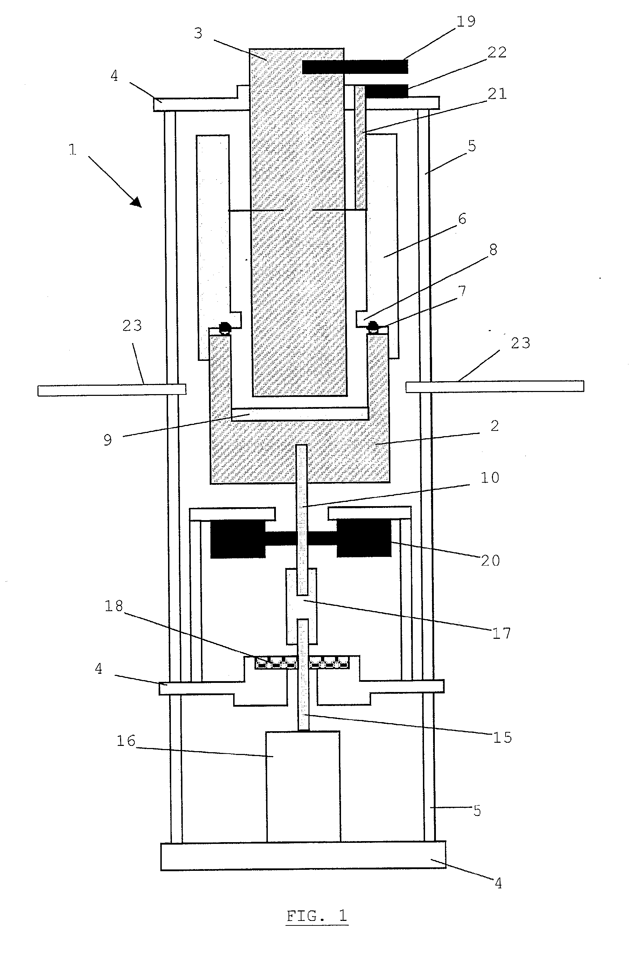

The method of the invention is characterized by the fact that an external force is applied to the Rhodium-containing solution, and preferred embodiments are related to a specific kind of force being applied. According to a first embodiment, this force is centrifugal. Figure 1 shows a schematic image of an apparatus 1 for applying this first embodiment of the method of the invention. The basic idea is to provide a first electrode in the form of a rotatable receptacle 2, and a second cylindrical counter-electrode 3, extending into the cavity of the receptacle. This cavity is filled with the HCl-solution containing Rhodium fragments. The receptacle 2 is rotated while an AC current is applied between the two electrodes. Due to the centrifugal forces, the fragments are held against the inner vertical wall of the receptacle 2 during rotation, which allows the dissolution to take place at higher dissolution rates than it is known in the art. The preferred embodiment of figure 1 is now described in more detail.

The apparatus 1 comprises a frame, for example made from PVC, which is made up from a number of circular and parallel supporting-plates 4 held together by cylindrical spacers 5. The working-electrode has the shape of a cylindrical, excavated receptacle 2 made of electrically conducting graphite, and provided with a nonconducting top-piece 6, for example in perspex, which can be screwed onto the receptacle 2, to increase the total volume of the system. Liquid-tightness at the graphite/perspex junction is ensured by means of an O-ring 7. To limit the upward movement - due to fluid convection currents- of small Rhodium fragments out of the receptacle and towards the upper section, the top-piece 6 is provided with a lower inside flange 8. The cylindrical graphite rod counter-electrode 3 is mounted in the upper supporting plate. A circular insulating Teflon or PEEK disk 9 covers the bottom of the working-electrode, so that the current will only flow towards the vertical wall of the receptacle. The receptacle/electrode 2 is fixed onto a stainless steel pin 10 connected to the shaft 15 of a DC motor-tacho-reductor combination 16 (for example a Minimotor, Type 2842-012) by means of an insulating peek bush 17. Vibrations of the system are eliminated by high-quality bearings 18 clipped onto the motor shaft and fixed into a supporting-plate.

The electrical contacts with the AC power supply are made by inserting a plug 19 into a notch in the top of the counter electrode 3 and by two spring-loaded, soft-bronze and parallel-circuited sliding brushes 20 contacting the stainless steel pin 10 that supports the rotating graphite receptacle 2.

Filled with a hydrochloric acid solution that contains the Rhodium fragments, the apparatus results in the fragments being held against the inner side wall of the working-electrode 2 during rotation at a suitable speed of said electrode, under the influence of the centrifugal force. The current will flow between this wall and the lower section of the vertical wall of the counter-electrode 3. Due to the Rhodium fragments being held against the inner wall of the receptacle, their dissolution in the HCl solution takes places at a high dissolution rate, as described above.

Preferred dimensions of the device are as follows: the receptacle 2 has an inner diameter of 3.6cm, an inside height of 1.4cm, therefore a surface area of the inner vertical wall of 15,8cm². The counter electrode has a diameter of 2.6cm and a height of 16cm. The distance between the disk 9 and the top of the counter electrode 3 is about 1mm.

The apparatus having these preferred dimensions is ideally operated at about 1000rpm, while a means is provided to measure and regulate the speed. Such a means comes in the form of standard measurement and regulation electronics (not shown), coupled to the electric motor.

As warming up and evaporation of the solution due to high-current flow and chemical reactions do result in a continuous decrease of the volume of the solution present in the reactor, feed-back addition of hydrochloric acid is preferably done by means of conductivity electronics that actuate a peristaltic pump (not shown). Therefore a third mini carbon-glass auxiliary electrode 21 (for example a Metrohm type 6.1247.000), sensing the liquid level, is mounted in the upper supporting-plate, and connected to the input 22 of the conductivity electronics. The conductivity measurements that trigger the pump are done between the counter electrode 3 and the auxiliary electrode 21. To prevent spills of the solution, the maximum allowable volume of hydrochloric acid introduced in the reactor with preferred dimensions is 40 ml at 1000 rpm.

To avoid boiling phenomena, automatic regulation of the temperature is preferably done. According to the preferred embodiment, two tubes 23 for providing a flow of compressed air are mounted for this purpose, diametrically on either side of the graphite receptacle, for example at a distance of 1 cm from the wall. The air flow supply valves (not shown) are actuated when the bulk temperature exceeds a reference value. A temperature sensor, for example an insulated mini-diode (1N4148) mounted in a constant-current bridge, is immersed into the solution. The output of the bridge is fed into a differential amplifier/variable reference and hysteresis comparator/current booster combination. According to the preferred embodiment, the temperature measured by the sensor is kept at 85±2°C.

The current is monitored and kept at a predefined value. In the preferred embodiment, this current value is 30A. The current detection is done by means of a low ohmic power resistor mounted in the high current circuit (not shown). The voltage over this resistor is rectified and fed into a differential amplifier the second input of which is an adjustable reference voltage the value of which determines the current set. The output of the amplifier actuates an AC phase controller that triggers a power triac by a photo-triac. This feedback electronics allow a maximum current of 30 ± 0.5 A.

A vacuum purge system is preferably present (not shown), to capture any corrosive gas emerging from the reactor. The entrance window of this vacuum purge system may be mounted in the upper supporting plate.

### Test results

To simulate the plating/(irradiation)/dissolution cycle, a series of Rhodium Cyclone 30 (IBA, Belgium) cyclotron targets were prepared by dc depletion constant-current (150 mA) electroplating at 60°C. An appropriate dilution of a commercially available sulphuric acid rhodium plating bath Rhodex (Enthone, The Netherlands) was used. As carriers, copper plates (surface area 11.69 cm², thickness 2 mm) were used. The thickness of the rhodium layers ranged from 10 up to 75µm corresponding to 146 up to 1096 mg Rhodium per target. Next the copper carriers were rapidly dissolved in a large excess of concentrated nitric acid, resulting in partial fragmentation of the Rh. Upon filtration (G-4 glass filter), washing (water, ethanol) and air-drying, further fragmentation was done in an agate mortar. About 20 g of fragments with thickness ranging from 10 to 75 µm and surface area ranging from 0.1 to 5 mm² were prepared.

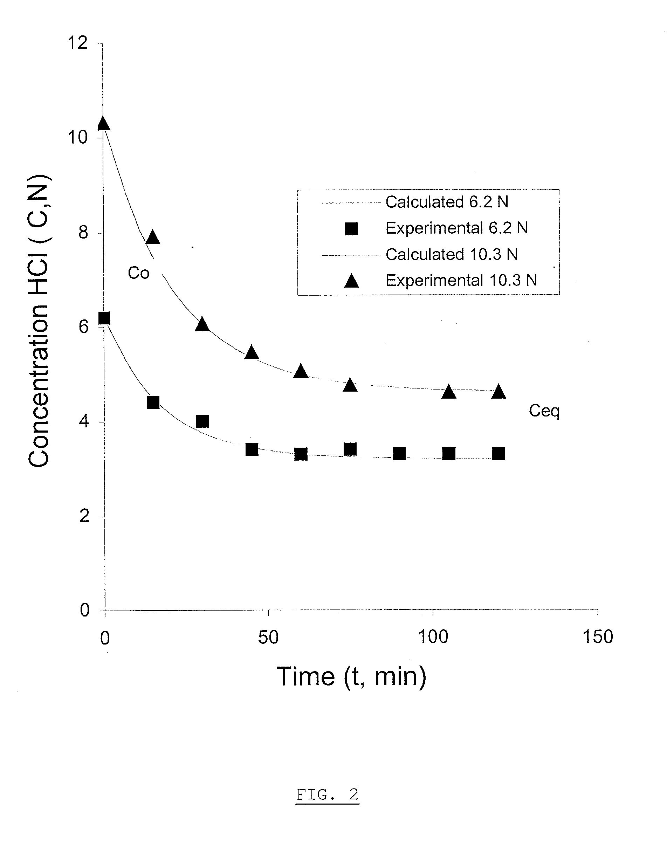

With these fragments, various experiments were performed with the apparatus of figure 1, having the dimensions as set forth above. The findings are shown on the graphs in figures 2 to 6. Figure 2 shows the HCl- solution's concentration as a function of time for the apparatus of figure 1 and with preferred dimensions, when applying an addition of the solution in order to keep the volume in the receptacle constant, as described above. This graph shows that the concentration reaches a constant value after about 1.5hours. The results in figure 2 were obtained with a current of 30A.

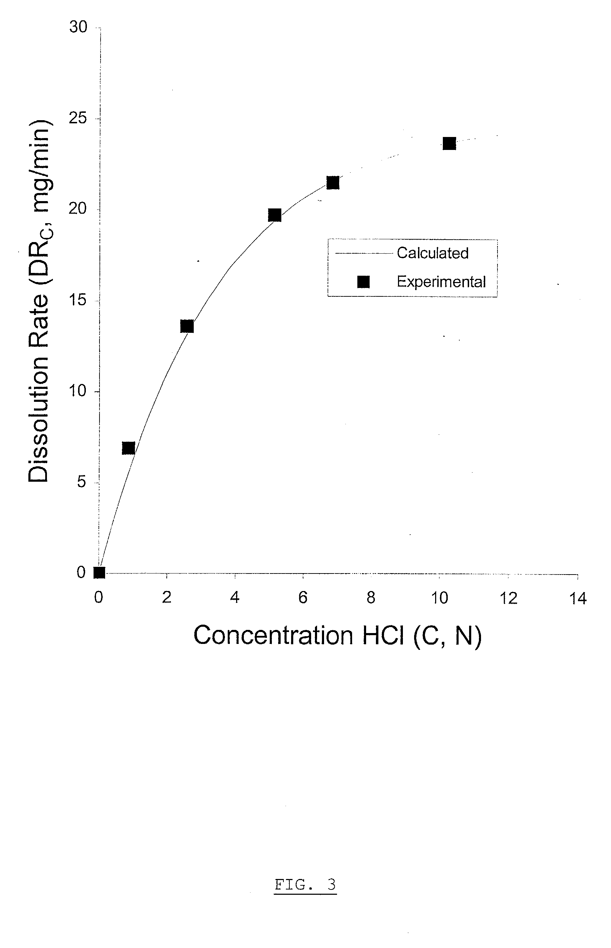

Figure 3 shows the dissolution rate as a function of the HCl concentration, for an input weight of Rh fragments of 1982mg and an applied current of 15A.

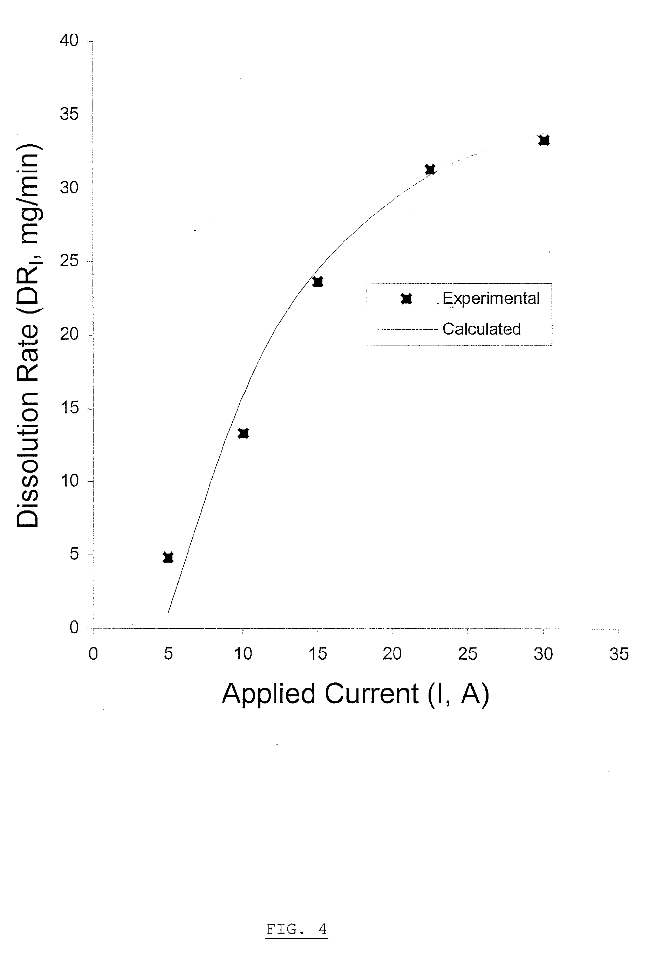

Figure 4 shows the dissolution rate as a function of the applied current, for an HCl concentration of 4.95N and an input weight of Rh target fragments of 1800mg.

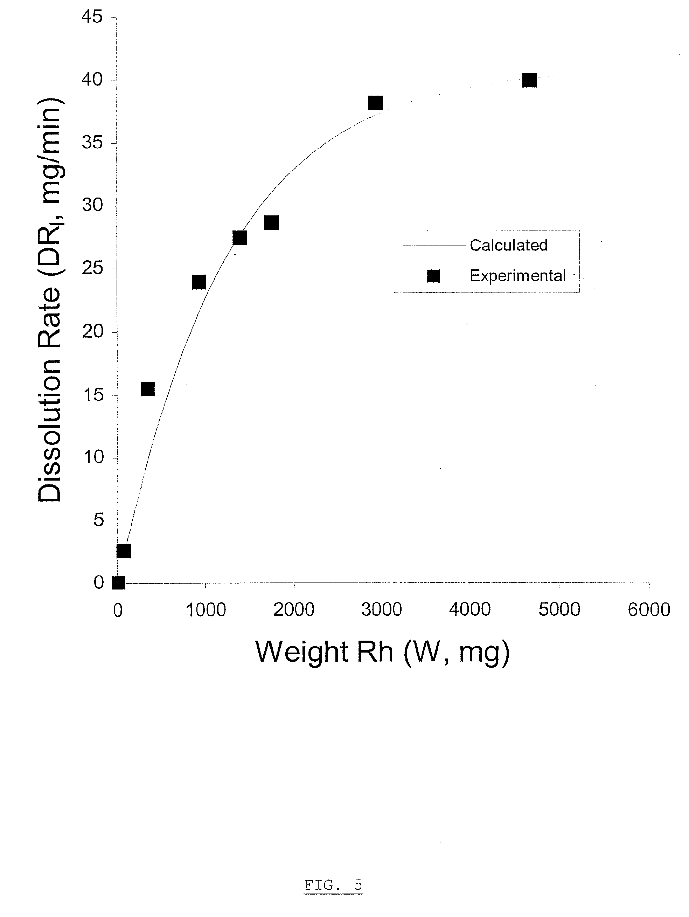

Figure 5 shows the dissolution rate as a function of input weight of target fragments, for a HCl concentration of 4.95N, and a current of 30A.

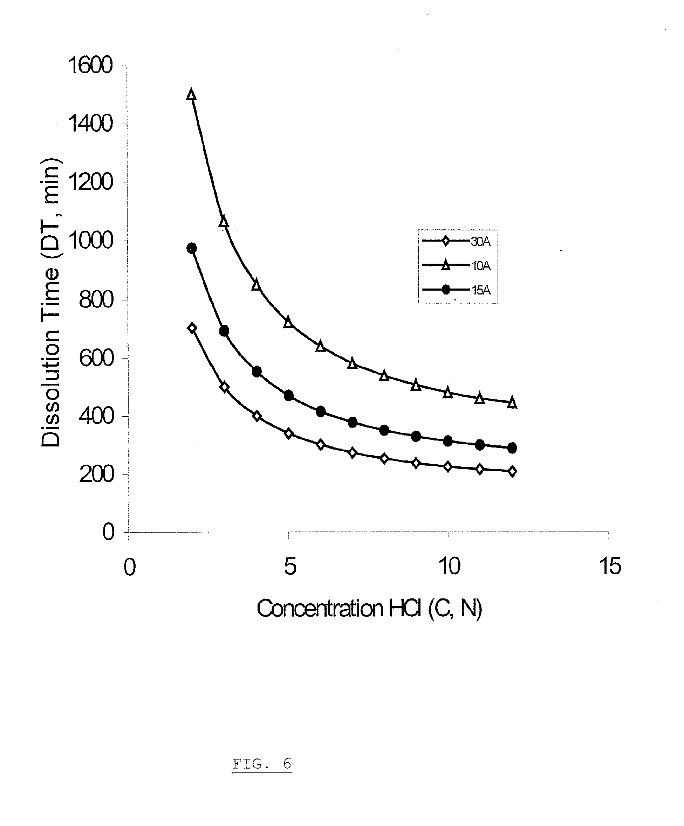

Without elaborating on the form of these curves, it suffices to conclude that the apparatus makes it possible to acquire dissolution rates of up to 40 mg/min. The graph in figure 6 adequately summarizes the qualities of the design. This graph shows the dissolution time, as a function of HCl concentration, for different currents, and for an input Rh weight of 5000mg. The dissolution time is defined as the time needed to dissolve 99% of the Rhodium fragments. The times which are achieved are superior to results obtained by prior art methods. In fact, using the prior art electrodissolution technique, it would be virtually impossible to obtain a dissolution of 99% Rh within a reasonable time frame, due to fragmentation of the Rhodium targets, as described above.

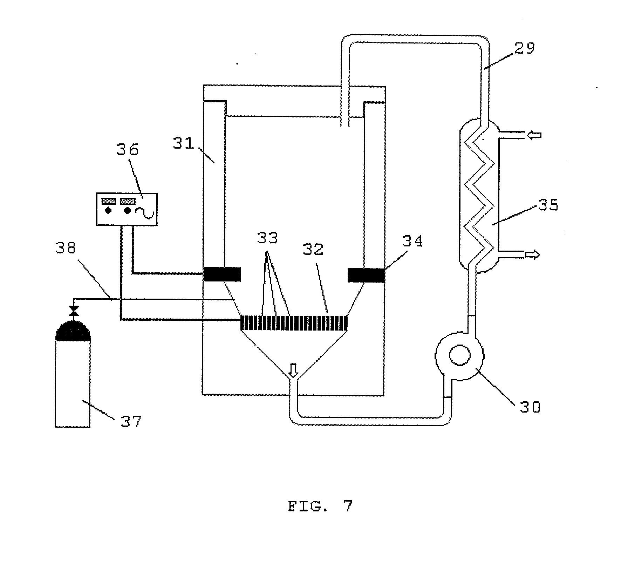

According to a second embodiment, the method is performed in the apparatus shown in figure 7. This apparatus basically consists of a liquid circuit 29, comprising a pump 30 for circulating said liquid in the circuit. The idea is to place two electrodes in the circuit, preferably in an electrodissolution cell 31, wherein one of these electrodes is made in the form of a graphite filter 32, i.e. a plate comprising small openings 33, and wherein said filter/electrode 32 is placed in the path of the liquid flow. The second electrode 34 is placed upstream of the filter, and is mounted in such a way as not to obstruct the flow. If the circulating liquid is an acid solution comprising Rhodium fragments, the acid flow will cause the Rhodium fragments to be held against the filter and accumulate there, as long as the average size of the fragments is larger than that of the openings. The size and number of these openings must be such that the liquid pressure difference across the filter is kept beneath a given limit. In other words, a liquid flow in the circuit 29 must remain possible for a prolonged period of time, while the majority of the Rh-fragments are being accumulated at the filter electrode 32. When an AC voltage is applied between the two electrodes, the rapid electrodissolution will take place at the filter-electrode 32, due to the same phenomenon that was observed in the apparatus of figure 1, namely the high production of the chlorine species that rapidly dissolves the Rhodium present at the filter-electrode.

The electrodes 32 and 34 are preferably made of electrically conducting graphite. The small openings are preferably small holes with an average size of 0.3 mm.
In the preferred embodiment, the apparatus further comprises a cooling system 35 for cooling the circulating liquid. A voltage source 36 is present and connected to the electrodes 32 and 34. A vessel 37 comprising C12 is preferably added and connected to the cell via a supply line 38. The addition of C12 is done in order to keep the concentration of the HCl solution in the circuit as high as possible.

Other embodiments of the invention may have characteristics related to the specific element which is to be dissolved. For example, a DC current may be applied in stead of an AC current, or HBr or HI may be used in stead of HCl.

## Claims

1. A method for the dissolution of an element, said method comprising the steps of:
- producing fragments of said element,
- introducing the fragments in a liquid, said liquid being an electrolyte,
- applying a current to said liquid, by contacting said liquid with two electrodes coupled to a voltage,
**characterized in that** said method further comprises the step of:
- applying an external force to said liquid, said force having the effect of displacing said fragments towards one electrode and holding a plurality of fragments against the surface of said electrode.

2. The method according to claim 1, wherein said force is a centrifugal force.

3. The method according to claim 1, wherein said force is a pressure difference, inducing the circulation of said liquid in a circuit.

4. The method according to claim 1, wherein said element is a metallic element chosen from the group of: Ruthenium, Rhodium, Palladium Osmium, Iridium, Platinum, Gold.

5. The method according to claim 4, wherein said fragments have previously undergone an irradiation treatment, so that said fragments contain a fraction of a radio-isotope.

6. An apparatus for performing the method of any one of claims 1 to 5, **characterized in that** said apparatus comprises :
- a first electrode in the form of a rotatable receptacle (2), for receiving an electrolyte comprising fragments which are to be dissolved in said electrolyte,
- a second electrode (3) extending into said receptacle (2), and being able to remain extended into said receptacle during rotation of said receptacle,
- a means for applying a voltage between said electrodes (2,3), during rotation of said first electrode (2).

7. The apparatus according to claim 6, wherein a top piece (6), made from a material which is not electrically conductive, can be mounted onto said rotatable receptacle/electrode (2).

8. The apparatus according to claim 6 or 7, wherein said apparatus comprises a means (21) for measuring the level of said liquid in said receptacle (2), and a means for adding said liquid to said receptacle during operation, in order to maintain the volume of said liquid at or around a predefined value.

9. The apparatus according to any one of claims 6 to 8, further comprising a temperature sensor able to measure the temperature of said liquid, and a means for cooling said receptacle (2), in order to maintain said temperature at or around a predefined value.

10. The apparatus according to claim 9, wherein said means for cooling consists of one or more tubes (23), able to direct a flow of compressed air towards said receptacle (2).

11. The apparatus according to any one of claims 6 to 10, further comprising a means for measuring the current between said two electrodes (2,3), and a means for controlling said current.

12. An apparatus for performing the method of any one of claims 1 to 5, **characterized in that** said apparatus comprises :
- A liquid circuit (29) comprising a pump (30), able to circulate a liquid in said circuit,
- a first electrode (32) which has the form of a filter, i.e. a plate comprising a plurality of openings (33), said openings being essentially smaller than the average size of said fragments, said filter being placed in said circuit, in such a way that the circulating liquid must pass through said filter,
- a second electrode (34), placed in said fluid circuit (29),
- a means (36) to apply a voltage between said two electrodes (32,34).

13. The apparatus according to claim 12, wherein said circuit (29) comprises an electrodissolution cell (31), and wherein said first electrode (32), i.e. said filter is located at the bottom of said cell, while said second electrode (34) is located above said first electrode.

14. The apparatus according to claim 12 or 13, further comprising a cooling system (35) for cooling said liquid during its circulation.
